# EUROPEAN PATENT SPECIFICATION

(11) **EP 3 171 701 B1**
(45) Date of publication and mention of the grant of the patent: **27.01.2021**
(21) Application number: 15825534.9
(22) Date of filing: 26.05.2015
(51) Int. Cl.: A23C 3/037, A23L 3/16, A23L 3/24, G02B 1/18, G06K 9/62, G08B 21/18, H04N 7/18

(54) **INFUSION PLANT**
INFUSIONSANLAGE
INSTALLATION D'INFUSION

(30) Priority: 25.07.2014 DK 201400410
(43) Date of publication of application: 31.05.2017
(73) Proprietor: SPX Flow Technology Danmark A/S, 8600 Silkeborg (DK)
(72) Inventor: THORSEN, Knud, DK-8883 Gjern (DK); RIIS, Claus, DK-8600 Silkeborg (DK); KJAERULFF, Gorm B., DK-8600 Silkeborg (DK); POULSEN, Ole, DK-7442 Engesvang (DK); THORSEN, Claus, 8600 Silkeborg (DK)
(74) Representative: Nordic Patent Service A/S
(86) International application number: PCT/DK2015/050128
(87) International publication number: WO 2016/012025

(56) References cited:
- EP-A1- 0 794 706
- EP-A1- 0 794 706
- EP-A1- 1 124 431
- WO-A1-02/060281
- US-A- 4 419 301
- US-A1- 2012 287 285
- US-A1- 2012 321 771
- DATABASE FSTA [Online] INTERNATIONAL FOOD INFORMATION SERVICE (IFIS), FRANkFURT-MAIN, DE; 1979, CORRIEU G, Lalande M, Ferret R.: "New monitoring equipment for the control and automatization of milk pasteurization plants.", XP002775686, Database accession no. FS-1981-04-P-0649 & FOOD PROCESS ENGINEERING 1979, 1979, IN 'FOOD PROCESS ENGINEERING 1979' [SEE FSSTA (1981) 13 4E167]. 1979 INRA, LAB. DE GENIE IND., VILLENEUVE D'ASCQ, FRANCE
- Peter M Withers: "Ultrasonic, acoustic and optical techniques for the non-invasive detection of fouling in food processing equipment", Trends in Food Science & Technology, 1 September 1996 (1996-09-01), pages 293-298, XP055424906, Retrieved from the Internet: URL:https://ac.els-cdn.com/092422449610031 5/1-s2.0-0924224496100315-main.pdf?_tid=97 1d5d8e-c948-11e7-9a28-00000aacb35e&acdnat= 1510670107_fbef112b7fcef05aad4c0bf99a0fb8e a [retrieved on 2017-11-14]

## Description

### TECHNICAL FIELD

The disclosure relates to a plant for ultra-high temperature treatment (UHT) of heat-sensitive fluid foodstuffs, such as whey protein concentrate, baby food, nutritious drinks and cheese milk, the plant comprising an infusion chamber in which the fluid is heat treated by way of supply of steam.

### BACKGROUND

EP 0 794 706 discloses an infusion plant for high temperature treatment heat-sensitive fluid foodstuffs, such as whey protein concentrate and cheese milk. The plant has an infusion chamber, in which the fluid is subjected to a heat treatment by feeding steam. The food product is introduced at the top of the infusion chamber as a bundle of separate and mainly downwardly directed jets of foodstuff. The lower section of the infusion chamber serves to collect the foodstuff and has cooled walls using a cooling jacket. An outlet opening of the infusion chamber is arranged at the bottom of the infusion chamber and the outlet opening is connected to the inlet of a positive-displacement pump. The outlet of the positive-displacement pump is connected to the inlet of a vacuum chamber that serves to remove water from the food product that was added during the steam infusion.

Other methods for temperature treatment of heat sensitive fluid foodstuffs are disclosed in the prior art. Thus, Corrieu G et al discloses in XP002775686 a milk pasteurization plant using heat exchangers. During the heat treatment of the milk, the heat exchanger plates become fouled by milk deposits. To improve the knowledge of the fouling problem an optical measuring cell was placed in the piping. The optical measuring cell could measure the degree of dilution of milk or the amount of solids in suspension. Peter M Withers discloses in XP055424906 various techniques for non-invasive detection of fouling in heat exchangers and pipework of ultra-high-temperature (UHT) processing plants. In one example reported a white-light source and a photosensor is fitted to a glass insert mounted in the flow system. The light source was arranged such that the light fell onto the outside of the glass insert at an angle of 45° to normal, whereas the photosensor was arranged to detect reflected light normal to the surface. US 2012/287285 A1 discloses a method of monitoring parts of a spray dryer subjected to the formation of deposits using cameras that may be either infrared cameras of a mix of infrared cameras and ordinary TV cameras.

The infusion plant uses high temperature for a short time to kill micro-organisms by steam infusion. This technology is widely used in the dairy industry where products can lose their nutritional value, flavor and appearance as micro-organisms multiply. These organisms thrive at certain temperatures but if they are not present in a product, the product can be stored for many months without the need for refrigeration. Steam infusion achieves this objective with minimal heat degradation compared with other UHT processes. It helps protect essential components such as vitamins and results in fresh tasting products with outstanding quality. It provides the necessary kill rate for commercial sterility and can handle a wide product viscosity range - covering fluids from milk, puddings, ice cream, baby food, condensed milk, processed cheese, sauces and creams to lotions.

In the known infusion plant a cooling jacket is provided around the bottom section of the infusion chamber for minimizing burn-on and fouling. However, fouling is not completely prevented and cleaning and/or rinsing of the infusion chamber is necessary after a given period of operation, depending e.g. on the type of foodstuff. It is though desirable to minimize fouling and to obtain longer running times between cleaning operations and thereby achieve better production efficiency. Also, a more predictable length of run time before cleaning is needed would be desirable. Overall, the market requests more efficient bacteria killing equipment to meet the increasingly demand to produce heat sensitive products like baby foods.

### SUMMARY

It is an object of the invention to provide an infusion plant for ultra-high treatment of fluid foodstuffs with longer and/or more predictable running time between cleaning operations necessitated by fouling or burn-on.

This object is achieved according to a first aspect of the invention by providing a plant for heat treating heat-sensitive fluid foodstuffs, such as whey protein concentrate, baby food, baby food liquid concentrates, nutritious drinks or cheese milk, the plant comprising an infusion chamber, in which the fluid foodstuff is subjected to a heat treatment by a feeding of steam, a fluid foodstuff inlet connected to a plurality of openings at the top of the infusion chamber for creating a plurality of essentially downwardly directed separate fluid foodstuff jets, the infusion chamber having a bottom section configured to collect the fluid foodstuff from the jets, the bottom section having an outlet opening at the bottom of the infusion chamber for allowing the collected fluid foodstuff to exit the infusion chamber, the outlet opening being connected to the inlet of a pump, and a cooling jacket surrounding the bottom section for cooling the wall of the bottom section, a digital optical camera configured for taking images and mounted on the infusion chamber with an angle of view covering in use at least a portion of the bottom section.

By providing a camera with an angle of view covering at least a portion of the bottom section transition fouling and burn-on can be instantly detected. This means that the operation can continue until fouling and/or burn-on is detected and the running time before cleaning does not have to be set at a preventively short interval, thereby providing longer and safer production time between cleanings, which significantly increases production efficiency of the infusion heat treatment plant.

In a first possible implementation form of the first aspect the optical camera is mounted at or near top of the infusion chamber, pointing downwards towards the bottom section.

In a second possible implementation form of the first aspect a wall of the infusion chamber is provided with a sight glass for the camera.

In a third possible implementation form of the first aspect the sight glass is at least on its inner side facing the interior of the infusion chamber provided with a coating to prevent formation of water droplets on the inner side.

The optical camera is a digital optical camera.

In a fourth possible implementation form of the first aspect images from the camera are processed by a processor that is configured to detect changes in the image, the processor further being configured to issue a notification or alarm when the processor has determined that the image from the camera has changed relative to an initial image.

In a fifth possible implementation form of the first aspect an optical camera is on the infusion chamber with an angle of view covering at least a portion of the bundle of foodstuff jets.

By providing a camera with an angle of view covering at least at least a portion of the bundle of foodstuff jets fouling and burn-on caused by a misaligned liquid foodstuff jet can be instantly detected. This means that the operation can continue until fouling and/or burn-on is detected and the running time before cleaning does not have to be set at a preventively short interval, thereby providing longer and safer production time between cleanings, which significantly increase production efficiency of the infusion heat treatment plant.

In a sixth possible implementation form of the first aspect the optical camera is mounted at or near the bottom of the infusion chamber, pointing upwards towards the upper section.

In a seventh possible implementation form of the first aspect the optical camera is mounted at or near upper section of the infusion chamber, pointing across the upper section.

In an eight possible implementation form of the first aspect a wall of the infusion chamber is provided with a sight glass for the camera.

In a ninth possible implementation form of the first aspect the sight glass is at least on its inner side facing the interior of the infusion chamber provided with a coating to prevent formation of water droplets on the inner side.

In a tenth possible implementation form of the first aspect images from the camera are processed by a processor that is configured to detect changes in the image, the processor further being configured to issue a notification or alarm when the processor has determined that the image from the camera has changed relative to an initial image.

The object above is also achieved according to a second aspect of the invention by providing a method for operating an infusion plant with an infusion chamber, in which fluid foodstuff is subjected to a heat treatment by a feeding of steam, the method comprising feeding fluid foodstuff into the infusion chamber with a plurality of fluid foodstuff jets, feeding steam into the infusion chamber, taking an initial image with a digital optical camera of at least a portion the interior of the infusion chamber, recording the initial image, repetitively taking images of the portion of the walls of the portion of the interior of the infusion chamber, comparing the last image taken with it the initial image, and issuing a notification or alarm when the last image taken is different from the initial image.

By taking images with a digital camera and comparing an initial image taken at the start of a production run with a present image fouling and burn-on can be instantly detected. This means that the operation can continue until fouling and/or burn-on is detected and the running time before cleaning does not have to be set at a preventively short interval, thereby providing longer and safer production time between cleanings, which significantly increases production efficiency of the infusion heat treatment plant.

In a first possible implementation form of the second aspect the portion of the interior of the infusion chamber comprises at least a portion the walls of the infusion chamber where fouling and/or burn-on is most likely to occur.

In a second possible implementation form of the second aspect the step of comparing the last image taken with the initial image comprises comparing a change in color of the last image taken compared to the initial image.

In a third possible implementation form of the second aspect the portion of the interior of the infusion chamber covers at least a portion of the bundle of fluid foodstuff jets.

In a fourth possible implementation form of the second aspect the step of comparing the last image taken with the initial image comprises comparing a change in pattern of the last image taken compared to the initial image.

The foregoing and other objects are achieved by the features of the independent claims. Further implementation forms are apparent from the dependent claims, the description and the figures.

These and other aspects of the invention will be apparent from and the embodiments described below.

### BRIEF DESCRIPTION OF THE DRAWINGS

In the following detailed portion of the present disclosure, the invention will be explained in more detail with reference to the example embodiments shown in the drawings, in which:
Fig. 1 is a diagrammatic view of an ultra-high temperature treatment plant,
Fig. 2 is a sectional view of an infusion plant according to an example embodiment,
Fig. 3 is an initial image taken by a camera of the infusion plant of Fig. 2,
Fig. 4 is an image taken by a camera of the infusion plant of Fig. 2 after a running time, and
Fig. 5 is a flow chart illustrating an example embodiment of a method for using an optical digital camera with an infusion plant.

### DETAILED DESCRIPTION

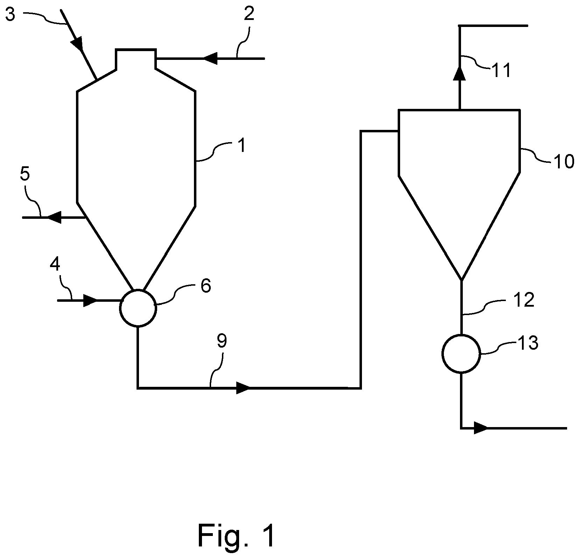

Fig. 1 discloses a plant for ultra-high temperature treatment of liquid foodstuff. The liquid foodstuff can be any foodstuff in liquid form, but the disclosed plant is particularly useful for temperature sensitive foodstuffs that should be heated for killing bacteria for a short period only so as to preserve their flavor, consistency and nutritious qualities. Examples of such liquid foodstuffs are milk, baby food liquid, baby food liquid concentrate or nutritional drinks (with high protein content). The liquid foodstuff may have a high dry matter content (40% and higher) and/or high protein content (6% or higher).

The plant of Fig. 1 has an infusion chamber 1 of a conventionally known type. The infusion chamber 1 is connected to a tube 2 for feeding fluid foodstuff to be heat treated inside the infusion chamber 1, and a tube 3 for the feeding of steam. Finally, the infusion chamber is connected to tubes 4 and 5 for feeding and removing liquid for cooling the bottom of the infusion chamber 1. In an embodiment the cooling liquid is water. The outlet of the infusion chamber 1 directly connected with a pump 6. In an embodiment the pump 6 is a centrifugal pump. In another embodiment the pump 6 is a positive displacement pump, such as a lobe or gear pump. The outlet of the pump 6 is connected to the inlet of a vacuum chamber 10 of a conventionally known type through a tube 9. This vacuum chamber is adapted to remove the amount of water being supplied in form of steam in the infusion chamber through a tube 11, whereas the concentrated fluid foodstuff is drained off through a tube 12 and a pump 13 in a conventionally known manner.

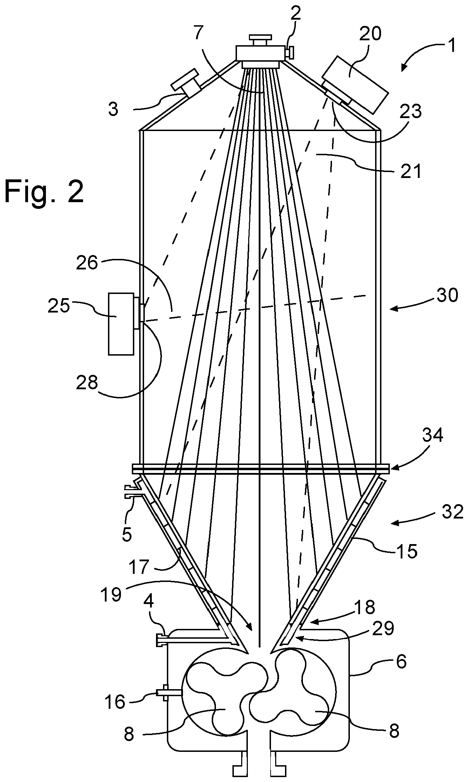

Fig. 2 is a diagrammatic sectional view of the infusion chamber. The infusion chamber is preferably essentially rotation symmetrical around a vertical axis. The upper section 30 of the infusion chamber has a hollow cylindrical part and a top part that is shaped similar to a conical frustum. A bottom section 32 is releasably connected to the upper section 30 by a flanged connection 34 for allowing access to the interior of the infusion chamber 1 for cleaning and/or maintenance. The bottom section 32 has in an embodiment a shape similar to a conical frustum. At the lower end of the infusion chamber there is an outlet opening 19 that is directly connected to the inlet of a lobe pump 6.

The fluid foodstuff to be treated is carried through the tube 2 into the infusion chamber 1. The fluid foodstuff enters the infusion chamber 1 as a bundle 7 of separate liquid foodstuff jets through a plurality of openings in a nozzle at the top of the infusion chamber 1. Hot steam is injected into the infusion chamber 1 through a circumferential steam distribution chamber in a well-known manner. In the infusion chamber 1 the liquid foodstuff jets meet the hot steam and the foodstuff is thereby heated and absorbs the steam.

The liquid foodstuff jets end on the funnel shaped inner wall of the bottom section 32. The bottom section 32 collects the liquid foodstuff from the liquid foodstuff jets and guides it to the outlet opening 19 at the lower end of the infusion chamber 1 (which is also the lower end of the bottom section 32 and which is also the inlet of the pump 6).

A cooling jacket 15 is provided around the bottom section 32. The cooling jacket 15 keeps the bottom section 32 cool, to prevent or minimize the liquid foodstuff that gets into contact with the inner walls of the bottom section 32 to foul or burn-on. The cooling jacket 15 provides for a mantle of cooling water or other cooling medium around the bottom section 32. The mantle is divided by a spiral traverse wall 17 that guides the cooling water in a spiral pattern around the bottom section 32. The inlet of the cooling water 4 passes though the pump housing and into a portion 29 of the mantle that extends also into the pump housing. From the portion 29 internal to the pump housing the spiral path of the cooling water continues spirally upwards towards the cooling medium outlet 5 at the top of the cooling jacket 15 and near the top of the bottom section 32.

The lower portion of the bottom section 32 forms the outlet opening 19 of the chamber that connects seamlessly to the inlet of the pump 6. This is in an embodiment achieved by the lower end of the bottom section 32 being made from steel plates, preferably stainless steel, and connected to the pump housing by welds 18. In an embodiment the pump housing is provided with a circular ridge or circular upright flange that facilitates welding of the pump housing to the lower end of the bottom section 32. After welding the transition between the bottom section 32 and the pump housing/pump inlet formed by the welds 18 is machined to provide a perfectly smooth surface without and cracks or fissures that could be difficult to clean or rinse.

The gear or lobe pump 6 is of a conventionally known type and is connected to the outlet 19 of the infusion chamber 1, and the housing of the gear or lobe pump 6 is provided with a temperature sensor 16 at a location where the adjacent surface is kept clean of burnings by means of the teeth of the gear wheels or by the lobes of the rotors 8. In this manner it is possible to ensure a reliable control of the plant.

In an example embodiment a digital optical camera 20 is mounted on the infusion chamber 1 with an angle of view 21 covering at least a portion of the bottom section 32 so that an operator or a processor configured therefore can determine that fouling has occurred (or not) and cleaning needs to be performed (or not). The optical camera 20 is preferably mounted at or near top of the infusion chamber 1, pointing downwards towards the bottom section 32. The wall of the infusion chamber is in an embodiment provided with a sight glass 23 for allowing the optical camera 20 to view into the infusion chamber 1.

The sight glass 23 is preferably at least on its inner side facing the interior of the infusion chamber 1 provided with a coating to prevent formation of water droplets on the inner side.

In an embodiment, images from the optical camera 20 are processed by a processor (not shown) that is configured to detect changes in the image. The processor is further configured to issue a notification or alarm when it has determined that the image taken by the camera 20 has changed relative to an initial image taken shortly after the start of a production run.

Another optical camera 25 (preferably a digital optical camera) is mounted on the infusion chamber 1 with an angle of view 26 covering at least a portion of the bundle 7 of fluid foodstuff jets.

The optical camera 25 can be mounted at or near the bottom of the infusion chamber 1, pointing upwards towards the upper section 30.

The optical camera 25 can alternatively be mounted at or near upper section 30 of the infusion chamber 1, pointing across the upper section 30. A sight glass 28 is provided in the wall of the infusion chamber 1 for optical camera 25. The sight glass is 28 can at least on its inner side facing the interior of the infusion chamber 1 be provided with a coating to prevent formation of water droplets on its inner side.

Images from camera 25 can in an embodiment be processed by a processor (not shown) that is configured to detect changes in the image, the processor further being configured to issue a notification or alarm when the processor has determined that the image from the optical camera 25 has changed relative to an initial image taken shortly after the start of a production run.

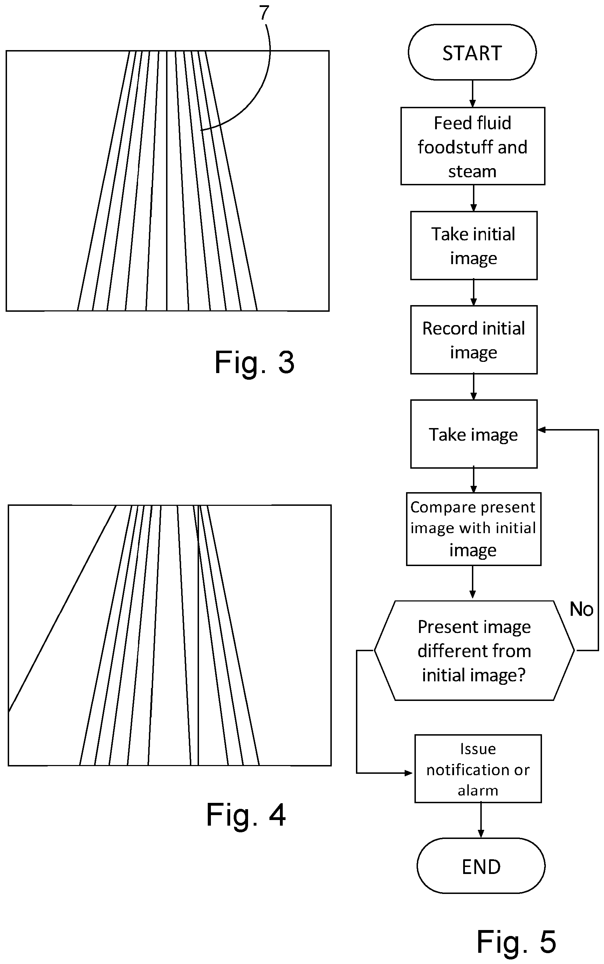

Fig. 3 shows an initial image taken at the start of a production run, i.e. shortly after cleaning and/or maintenance of the infusion chamber 1 with the bundle of fluid foodstuff jets 7 having a correct configuration. Fig. 4 shows an image taken after some running time. The pattern of fluid foodstuff jets 7 has changed, e.g. by foodstuff partially clogging up one of the openings in the nozzle and thereby changing the direction of the fluid foodstuff jet coming from the partially clogged opening. The fluid foodstuff jet with the changed direction will hit the not-cooled side wall of the upper section 30 and thereby cause fouling and/or burn-on. Thus, at the moment where the image of Fig. 4 is taken cleaning and/or maintenance is needed.

Thus, optical camera 25 supervises that fluid foodstuff jets do only spray down on the anti-fouling cooled surface at the bottom section 32 of the infusion chamber 1. If foodstuff product sprays outside bottom anti-fouling surface of the bottom section 32, then fouling will be generated and systems are stopped as a consequence. Optical camera 25 warns the operators of potential problems and the operators can react and adjust to prevent fouling problems.

Fig. 5 shows an example embodiment of a method for operating an infusion plant as described here above. The method includes feeding fluid foodstuff into the infusion chamber 1 with a plurality of fluid foodstuff jets and feeding steam into the infusion chamber 1. Then, taking an initial image with a digital optical camera of the interior of the infusion chamber followed by recording the initial image. Next, repetitively taking images of the portion of the walls of the infusion chamber 1 where fouling and/or burn on is most likely to occur (i.e. the inner walls of the bottom section), an comparing the last image taken with it the initial image, and issuing a notification or alarm when the last image taken is different from the initial image. The camera 20,25 is in an embodiment with its angle of view directed to cover at least a portion the walls of the infusion chamber 1 where fouling and/or burn-on is most likely to occur. In an embodiment the method may further include comparing the last image taken with the initial image and comparing a change in color of the last image taken compared to the initial image.

In another embodiment of the method the portion of the interior of the infusion chamber covers at least a portion of the bundle of fluid foodstuff jets 7. The method may further include comparing the last image taken with the initial image by comparing a change in pattern of the last image taken compared to the initial image and issuing an alarm or notification when a change in pattern has been detected.

## Claims

1. A plant for heat treating heat-sensitive fluid foodstuffs, such as whey protein concentrate, baby food, baby food liquid concentrates, nutritious drinks or cheese milk, said plant comprising:
an infusion chamber (1), in which the fluid foodstuff is subjected to a heat treatment by a feeding of steam (3),
a fluid foodstuff inlet (2) connected to a plurality of openings at the top of said infusion chamber for creating a plurality of essentially downwardly directed separate fluid foodstuff jets,
said infusion chamber having a bottom section (32) configured to collect the fluid foodstuff from said jets,
said bottom section having an outlet opening (19) at the bottom of said infusion chamber for allowing said collected fluid foodstuff to exit said infusion chamber,
said outlet opening being connected to the inlet of a pump (6), and
a cooling jacket (15) surrounding said bottom section for cooling the wall of said bottom section,
a digital optical camera (20) configured for taking images and mounted on said infusion chamber with an angle of view (21) covering in use at least a portion of said bottom section.

2. A plant according to claim 1 wherein said digital optical camera is mounted at or near top of said infusion chamber, pointing downwards towards said bottom section (32) .

3. A plant according to claim 1 or 2, wherein a wall of said infusion chamber is provided with a sight glass (23) for said digital optical camera, said sight glass being at least on its inner side facing the interior of said infusion chamber provided with a coating to prevent formation of water droplets on said inner side.

4. A plant according to any one of claims 1 to 3, wherein images from said digital optical camera are processed by a processor that is configured to detect changes in said image, said processor further being configured to issue a notification or alarm when said processor has determined that the image from said digital optical camera has changed relative to an initial image.

5. A plant according to any one of the claims 1 to 4, wherein a digital optical camera is mounted on said infusion chamber with an angle of view covering at least a portion of said bundle of foodstuff jets (7).

6. A plant according to claim 5, wherein said digital optical camera is mounted at or near the bottom of said infusion chamber, pointing upwards towards said upper section.

7. A plant according to claim 5, wherein said optical camera (25) is mounted at or near upper section (30) of said infusion chamber, pointing across the upper section.

8. A plant according to any one of claims 5 to 7, wherein a wall of said infusion chamber is provided with a sight glass (28) for said digital optical camera, said sight glass being at least on its inner side facing the interior of said infusion chamber provided with a coating to prevent formation of water droplets on said inner side.

9. A plant according to claim 8, wherein images from said camera are processed by a processor that is configured to detect changes in said image, said processor further being configured to issue a notification or alarm when said processor has determined that the image from said optical camera has changed relative to an initial image.

10. A method for operating an infusion plant with an infusion chamber, in which fluid foodstuff is subjected to a heat treatment by a feeding of steam, said method comprising:
feeding fluid foodstuff into said infusion chamber with a plurality of fluid foodstuff jets,
feeding steam into said infusion chamber,
taking an initial image with a digital optical camera of at least a portion of the interior of said infusion chamber,
recording said initial image,
repetitively taking images of said portion of the walls of said portion of the interior of said infusion chamber,
comparing the last image taken with said initial image, and
issuing a notification or alarm when the last image taken is different from the initial image.

11. A method according to claim 10, wherein said portion of the interior of the infusion chamber comprises at least a portion the walls of said infusion chamber where fouling and/or burn-on is most likely to occur.

12. A method according to claim 11, wherein said step of comparing the last image taken with said initial image comprises comparing a change in color of said last image taken compared to said initial image.

13. A method according to claim 10, wherein said portion of the interior of the infusion chamber covers at least a portion of said bundle of fluid foodstuff jets, said step of comparing the last image taken with said initial image comprising comparing a change in pattern of said last image taken compared to said initial image.

## Patentansprüche

1. Anlage zur Wärmebehandlung wärmeempfindlicher flüssiger Nahrungsmittel wie Molkeproteinkonzentrat, Babynahrung, flüssige Babynahrungskonzentrate, nahrhafte Getränke oder Käsemilch, wobei die Anlage Folgendes umfasst:
eine Infusionskammer (1), in der das flüssige Nahrungsmittel durch Einspeisen von Dampf (3) einer Wärmebehandlung unterzogen wird,
einen Einlass für das flüssige Nahrungsmittel (2), der mit einer Vielzahl von Öffnungen am oberen Ende der Infusionskammer verbunden ist, um eine Vielzahl von im Wesentlichen nach unten gerichteten separaten Strahlen der flüssigen Nahrungsmittel zu erzeugen,
wobei die Infusionskammer einen unteren Abschnitt (32) aufweist, der konfiguriert ist, um die flüssige Nahrungsmittel aus den Strahlen zu sammeln,
wobei der untere Abschnitt eine Auslassöffnung (19) am Boden der Infusionskammer aufweist, damit das gesammelte flüssige Nahrungsmittel aus der Infusionskammer austreten kann,
wobei die Auslassöffnung mit dem Einlass einer Pumpe (6) verbunden ist, und
einen Kühlmantel (15), der den unteren Abschnitt umgibt, um die Wand des unteren Abschnitts zu kühlen,
eine digitale optische Kamera (20), die konfiguriert ist, um Bilder aufzunehmen, und die an der Infusionskammer mit einem Sichtwinkel (21) angebracht ist, der mindestens einen Teil des unteren Abschnitts abdeckt.

2. Anlage nach Anspruch 1, wobei die digitale optische Kamera am oder nahe dem oberen Ende der Infusionskammer angebracht ist und nach unten in Richtung des unteren Abschnitts (32) zeigt.

3. Anlage nach Anspruch 1 oder 2, wobei eine Wand der Infusionskammer mit einem Schauglas (23) für die digitale optische Kamera versehen ist, wobei das Schauglas mindestens auf seiner Innenseite dem Inneren der Infusionskammer zugewandt ist, die mit einer Beschichtung versehen ist, um die Bildung von Wassertröpfchen an der Innenseite zu verhindern.

4. Anlage nach einem der Ansprüche 1 bis 3, wobei Bilder von der digitalen optischen Kamera von einem Prozessor verarbeitet werden, der konfiguriert ist, um Veränderungen in dem Bild zu erfassen, wobei der Prozessor ferner konfiguriert ist, um eine Benachrichtigung oder einen Alarm auszugeben, wenn der Prozessor festgestellt hat, dass sich das Bild von der digitalen optischen Kamera relativ zu einem Ausgangsbild verändert hat.

5. Anlage nach einem der Ansprüche 1 bis 4, wobei eine digitale optische Kamera mit einem Sichtwinkel an der Infusionskammer angebracht ist, der mindestens einen Teil des Bündels von Nahrungsmittelstrahlen (7) abdeckt.

6. Anlage nach Anspruch 5, wobei die digitale optische Kamera am oder nahe dem Boden der Infusionskammer angebracht ist und nach oben in Richtung des oberen Abschnitts zeigt.

7. Anlage nach Anspruch 5, wobei die optische Kamera (25) am oder nahe dem oberen Abschnitt (30) der Infusionskammer angebracht ist und über den oberen Abschnitt zeigt.

8. Anlage nach einem der Ansprüche 5 bis 7, wobei eine Wand der Infusionskammer mit einem Schauglas (28) für die digitale optische Kamera versehen ist, wobei das Schauglas mindestens auf seiner Innenseite dem Inneren der Infusionskammer zugewandt ist, die mit einer Beschichtung versehen ist, um die Bildung von Wassertröpfchen an der Innenseite zu verhindern.

9. Anlage nach Anspruch 8, wobei Bilder von der Kamera von einem Prozessor verarbeitet werden, der konfiguriert ist, um Veränderungen in dem Bild zu erfassen, wobei der Prozessor ferner konfiguriert ist, um eine Benachrichtigung oder einen Alarm auszugeben, wenn der Prozessor festgestellt hat, dass sich das Bild von der optischen Kamera relativ zu einem Ausgangsbild verändert hat.

10. Verfahren zum Betreiben einer Infusionsanlage mit einer Infusionskammer, in der flüssige Nahrungsmittel durch Einspeisen von Dampf einer Wärmebehandlung unterzogen wird, wobei das Verfahren Folgendes umfasst:
Einspeisen eines flüssigen Nahrungsmittels in die Infusionskammer mit einer Vielzahl von Strahlen der flüssigen Nahrungsmittel,
Einspeisen von Dampf in die Infusionskammer,
Aufnahmen eines Ausgangsbildes von mindestens einem Teil des Inneren der Infusionskammer mit einer digitalen optischen Kamera,
Aufzeichnen des Ausgangsbildes,
wiederholtes Aufnehmen von Bildern des Teils der Wände des Teils des Inneren der Infusionskammer,
Vergleichen des letzten aufgenommenen Bildes mit dem Ausgangsbild und
Ausgeben einer Benachrichtigung oder eines Alarms, wenn sich das zuletzt aufgenommene Bild vom Ausgangsbild unterscheidet.

11. Verfahren nach Anspruch 10, wobei der Teil des Inneren des Inneren der Infusionskammer mindestens einen Teil der Wände der Infusionskammer umfasst, in dem Verschmutzung und/oder Anbacken am wahrscheinlichsten auftreten.

12. Verfahren nach Anspruch 11, wobei der Schritt des Vergleichens des zuletzt aufgenommenen Bildes mit dem Ausgangsbild das Vergleichen einer Veränderung der Farbe des zuletzt aufgenommenen Bildes im Vergleich zu dem Ausgangsbild umfasst.

13. Verfahren nach Anspruch 10, wobei der Teil des Inneren der Infusionskammer mindestens einen Teil des Bündels von Nahrungsmittelstrahlen abdeckt, wobei der Schritt des Vergleichens des zuletzt aufgenommenen Bildes mit dem Ausgangsbild das Vergleichen einer Veränderung des Musters des zuletzt aufgenommenen Bildes im Vergleich zu dem Ausgangsbild umfasst.

## Revendications

1. Installation destinée au traitement thermique des produits alimentaires fluides sensibles à la chaleur, tels qu'un concentré de protéines de lactosérum, des aliments pour bébés, des concentrés liquides d'aliments pour bébés, des boissons nutritives ou du lait de fromagerie, ladite installation comprenant :
une chambre d'infusion (1), dans laquelle le produit alimentaire liquide est soumis à un traitement thermique au moyen d'une alimentation de vapeur (3),
une entrée de produit alimentaire liquide (2) reliée à une pluralité d'ouvertures au niveau de la partie supérieure de ladite chambre d'infusion destinée à la création d'une pluralité de jets de produit alimentaire liquide séparés essentiellement dirigés vers le bas,
ladite chambre d'infusion comportant une section inférieure (32) configurée pour recueillir le produit alimentaire liquide à partir desdits jets,
ladite section inférieure comportant une ouverture de sortie (19) au niveau de la partie inférieure de ladite chambre d'infusion pour permettre audit produit alimentaire liquide recueilli de sortir de ladite chambre d'infusion,
ladite ouverture de sortie étant reliée à l'entrée d'une pompe (6), et
une chemise de refroidissement (15) entourant ladite section inférieure destinée au refroidissement de la paroi de ladite section inférieure,
une caméra optique numérique (20) configurée pour prendre des images et montée sur ladite chambre d'infusion avec un angle de vue (21) couvrant durant l'utilisation au moins une partie de ladite section inférieure.

2. Installation selon la revendication 1 dans laquelle ladite caméra optique numérique est montée au niveau ou à proximité de la partie supérieure de ladite chambre d'infusion, pointant vers le bas dans la direction de ladite section inférieure (32).

3. Installation selon la revendication 1 ou 2, dans laquelle une paroi de ladite chambre d'infusion est dotée d'un voyant (23) pour ladite caméra optique numérique, ledit voyant étant au moins sur son côté interne face à l'intérieur de ladite chambre d'infusion doté d'un revêtement pour empêcher la formation de gouttelettes d'eau sur ledit côté interne.

4. Installation selon l'une quelconque des revendications 1 à 3, dans laquelle les images de ladite caméra optique numérique sont traitées par un processeur qui est configuré pour détecter les modifications sur ladite image, ledit processeur étant en outre configuré pour émettre une notification ou une alarme lorsque ledit processeur a déterminé que l'image de ladite caméra optique numérique a changé par rapport à une image initiale.

5. Installation selon l'une quelconque des revendications 1 à 4, dans lequel une caméra optique numérique est montée sur ladite chambre d'infusion avec un angle de vue couvrant au moins une partie desdits faisceaux de jets de produit alimentaire (7).

6. Installation selon la revendication 5, dans laquelle ladite caméra optique numérique est montée au niveau ou à proximité de la partie inférieure de ladite chambre d'infusion, pointant vers le haut en direction de ladite section supérieure.

7. Installation selon la revendication 5, dans laquelle ladite caméra optique (25) est montée au niveau ou à proximité de la section supérieure (30) de ladite chambre d'infusion, pointant à travers la section supérieure.

8. Installation selon l'une quelconque des revendications 5 à 7, dans laquelle une paroi de ladite chambre d'infusion est dotée d'un voyant (28) pour ladite caméra optique numérique, ledit voyant étant au moins sur son côté interne face à l'intérieur de ladite chambre d'infusion doté d'un revêtement pour empêcher la formation de gouttelettes d'eau sur ledit côté interne.

9. Installation selon la revendication 8, dans laquelle les images de ladite caméra optique sont traitées par un processeur qui est configuré pour détecter les modifications sur ladite image, ledit processeur étant en outre configuré pour émettre une notification ou une alarme lorsque ledit processeur a déterminé que l'image de ladite caméra optique a changé par rapport à une image initiale.

10. Procédé de fonctionnement d'une installation d'infusion avec une chambre d'infusion, dans lequel le produit alimentaire liquide est soumis à un traitement thermique par une alimentation de vapeur, ledit procédé comprenant :
l'alimentation d'un produit alimentaire liquide dans ladite chambre d'infusion avec une pluralité de jets de produit alimentaire liquide,
l'alimentation de vapeur dans ladite chambre d'infusion,
la prise d'une image initiale avec une caméra optique numérique d'au moins une partie de l'intérieur de ladite chambre d'infusion,
l'enregistrement de ladite image initiale,
la prise répétée d'images de ladite partie des parois de ladite partie de l'intérieur de ladite chambre d'infusion,
la comparaison de la dernière image prise à ladite image initiale, et
l'émission d'une notification ou d'une alarme lorsque la dernière image prise est différente de l'image initiale.

11. Procédé selon la revendication 10, dans lequel ladite partie de l'intérieur de la chambre d'infusion comprend au moins une partie des parois de ladite chambre d'infusion où un encrassement et/ou une brûlure sont les plus susceptibles de se produire.

12. Procédé selon la revendication 11, dans lequel ladite étape de comparaison de la dernière image prise à ladite image initiale comprend la comparaison d'un changement de couleur de ladite dernière image prise comparé à ladite image initiale.

13. Procédé selon la revendication 10, dans lequel ladite partie de l'intérieur de la chambre d'infusion couvre au moins une partie dudit faisceau de jets de produit alimentaire liquide, ladite étape de comparaison de la dernière image prise à ladite image initiale comprenant la comparaison d'une modification du profil de ladite image prise comparé à ladite image initiale.
